# EUROPEAN PATENT SPECIFICATION

(11) **EP 0 608 027 B1**
(45) Date of publication and mention of the grant of the patent: **15.05.2002**
(21) Application number: 94200097.7
(22) Date of filing: 15.01.1994
(51) Int. Cl.: A23L 1/275, C09B 61/00, A23L 1/212

(54) **Natural coloring products**
Natürliche Farbstoffe
Agents colorants naturels

(30) Priority: 21.01.1993 IL 10447393
(43) Date of publication of application: 27.07.1994
(73) Proprietor: Lycored Natural Products Industries Ltd, 84102 Beer Sheva (IL)
(72) Inventor: Hartal, Dov, Tel-Baruch, Tel-Aviv 69016 (IL); Raveh, Yigal, Haifa 34950 (IL)
(74) Representative: Modiano, Guido, Dr.-Ing.

(56) References cited:
- WO-A-92/18471
- DATABASE WPI Section Ch, Week 7913, Derwent Publications Ltd., London, GB; Class D13, AN 79-25093B & JP-A-54 024 940 (KAGOME) 24 February 1979
- JOURNAL OF AGRICULTURAL AND FOOD CHEMISTRY., vol.40, 1992, WASHINGTON US pages 390 - 398 F.KHASCHIK ET AL. 'Effect of food preparation on qualitative and quantitative distribution of major carotenoid contents of tomatoes and several green vegetables'
- JOURNAL OF FOOD SCIENCE, vol.47, 1982, CHICAGO US pages 1853 - 1858 M.C.DALE ET AL. 'Concentration of tomato products:analysis of ernergy saving process alternatives'

## Description

### Field of the Invention

The present invention relates to novel natural coloring products. More particularly, the invention relates to lycopene-based coloring materials.

### BACKGROUND OF THE INVENTION

Coloring materials are used in a variety of uses, particularly in the food industry. Yellow-red colors are most interesting in the food industry and are used, e.g., to impart more "natural" colors to carbonated drinks, soups and a variety of food products. Unfortunately, in recent years there is felt a shortage of natural orange-red coloring materials, due to the fact that a number of synthetic food colors have been suspected of carcinogenic activity, or their use has been disallowed by health agencies, as being suspect health hazards.

The art has failed so far to provide functional versatile coloring materials of natural source in the orange-red color range. In some instances, β-carotene is used as a natural coloring material, which is capable to impart an orange-yellow color, and which is extracted from natural sources, e.g., from algae. However, known natural materials often suffer from different severe drawbacks. In general, the use of natural colorants is very expensive since they are inferior in coloring potency in comparison with synthetic colorants. Furthermore, many natural colors are pH-dependent and change their color in the food product, as a result of pH changes or of oxidation in air, and are easily destroyed by moderate heat.

Another candidate for use as a coloring material is lycopene, which belongs to the family of the carotenoids, same as β-carotene. Lycopene has the formula: 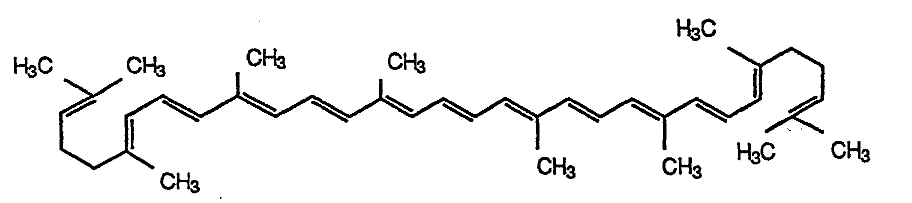 and can be found in natural sources, such as tomatoes and watermelon. Unfortunately, although lycopene is the coloring matter which imparts the bright red color to these fruits, when it is extracted therefrom it loses its red color and becomes orange-yellow, similarly - although with a stronger intensity - to the color obtainable with β-carotene.

Such a change would indeed occur if any of the following inventions were utilized for the isolation of lycopene from fruit sources.

JP-A-54024940 discloses the preparation of carotenoid-containing material from tomatoes or processed tomato foodstuff comprising mainly lycopene by extracting the said material with alkali and acid. The carotenoid-containing material is used for coloration of foodstuff.

WO-A-92 18471 discloses a process for extracting carotenoids from a carotenoid-containing natural source which comprises the steps of a) separating a natural source of a carotenoid-containing liquid fraction and a pulp fraction, b) contacting the carotenoid-containing liquid fraction with an effective fractionating amount of calcium chloride so as to fractionate the liquid fraction into a carotenoid-enriched solid precipitate portion and a carotenoid-depleted liquid portion, and c) separating the carotenoid-enriched solid portion from the carotenoid-depleted liquid portion.

In Journal of Food Science, vol. 47, 1982, Chicago, US pages 1853-1858, M.C. Dale et al. describe the concentration of tomato products by 1) washing, sorting the tomatoes and then chopping the said tomatoes into a steam vessel and heating to 90°C, 2) removing the skin and seeds from the trated tomatoes to provide tomato pulp, 3) centrifuging the pulp into tomato serum and tomato solids (tomato fibre), and 4) concentrating the tomato serum.
The tomato solids from the centrifugation and the concentrated serum are recombined by simply stirring together the appropriate proportions of each so as to obtain a tomato concentrate.

It is therefore clear that it would be highly desirable to provide a natural coloring material which is capable of imparting a red color to food and other products, and which does not present the problems inherent to prior art colorants.

It is an object of the present invention to provide such novel coloring materials, which can be safely employed as colorants in food products.

It is another object of the invention to provide natural coloring materials which overcome the drawbacks of prior art materials, which present improved stability to pH changes and heat processing, and which can be used in a variety of food products.

It is still another object of the invention to provide a process for preparing such novel coloring materials.

It is a further object of the invention to provide food products to which a desired shade of red has been imparted by the coloring materials of the invention.

Other objects and advantages of the invention will become apparent as the description proceeds.

### Brief Description of the Drawing

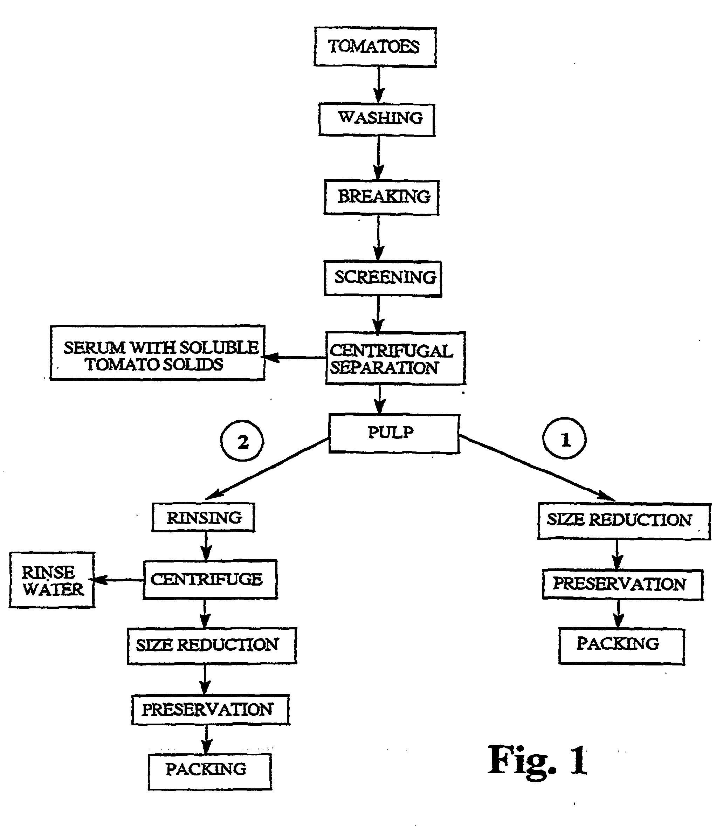

- Fig. 1 is a schematic flow-sheet of two alternative preparation. processes, leading to coloring materials useful for different uses.

### SUMMARY OF THE INVENTION

The present invention regards the use as a colorant of a material comprising chromoplast particles containing lycopene contained in a fruit pulp, the lycopene being not extracted from the fruit pulp. The present invention also regards a method for colouring products using a material comprising chromoplast particles containing lycopene contained in a fruit pulp, the lycopene being not extracted from the fruit pulp.

The coloring material of the invention comprises, as the color-imparting agent, chromoplast particles containing crystalline lycopene. Naturally occurring chromoplasts, in lycopene-rich fruit, contain lycopene in crystalline form and in varying concentration. The lycopene crystals are enclosed in chromoplast particles which, after processing, are dispersed in the natural insoluble fraction of the fruit. Such chromoplasts are small natural double-membrane capsules. Without wishing to be bound by any particular theory, it is the belief of the inventors that keeping the lycopene in crystalline form is instrumental in maintaining their intense red color, inasmuch as the crystalline structure of lycopene is preserved therein and is apparently destroyed or otherwise changed by extraction. However, partial breakage of a fraction of the chromoplasts is permissible, and does not substantially adversely affect the coloring materials of the invention- Thus, coloring material according to the invention retains a high staining power in the red color range, as compared with the extraction of the pigments, which is effected according to the known art.

It should be noted that, while there is no specific teaching in the art for the use of lycopene extracts from tomatoes or the like fruit for coloring purposes, it is custornary in the art to extract pigments from natural sources, for use as flavors or colorants, e.g., as is done with β-carotene or chlorophyll. However, nowhere in the art can be found a teaching that chromoplast particles containing a crystalline carotenoid, such as lycopene, can be directly used as a coloring material, without extraction, nor that such material will retain a higher coloring power and deeper red shade.

It should further be noted that lycopene looses an essential part of its staining power in the red color range when it is extracted from the chromoplasts which contain it. Additionally, the chromoplast particles containing crystalline lycopene have been found to be relatively insensible to the effect of heat and oxidation, which strongly and adversely affect pure lycopene.

Another substantial advantage of the coloring material according to the invention is that it is easily water-dispersible. This, as will be appreciated by a skilled person, is an essential feature for a colorant meant for the food industry, since most food products are water based.

The chromoplast which contains lycopene can be derived from several sources, and there is no limitation to its source. According to a preferred embodiment of the invention, however, the chromoplast particles containing crystalline lycopene are derived from tomatoes, and reference will be made mostly to tomatoes in the following description, as the representative source, it being understood that statements made in respect of tomatoes apply to other sources as well, *mutatis mutandis*. Furthermore, the use of the materials of the inventions as colorants is not limited to food products, and they can be used for any other suitable purposes, e.g., in cosmetic preparations, such as eye shadow, make-up, lipstick, etc.

In many cases, specifically when the food product to be colored is not related to the source of the coloring material, natural flavors found therein render it unsuitable for use. For instance, when coloring a sweet fruit dessert, tomato flavors are highly undesirable. According to a preferred embodiment of the invention, therefore, the coloring material is water-rinsed to remove flavors, prior to such use. Since the coloring materials of the invention are solid, water-insoluble materials, rinsing does not lead to a reduction of overall yield due to pigment carry-over, as may occur with water-soluble materials. Additionally, no solvents or other chemicals are employed in the process of the invention, and therefore no foreign and/or potentially harmful materials are used at any time during the manufacturing of the coloring concentrate of the invention.

Another advantage of the invention is that it is possible to provide different degrees of coloring power in the solid coloring materials of the invention, by producing them starting with different pigment content in the fruits. Growing high-pigment containing tomatoes, for instance, is within the skill of the routineer, and different varieties, containing different contents of lycopene, can be developed by means known *per se*, which are not discussed here. Thus, instead of the regular tomatoes, which contain approximately 50-70 ppm of lycopene, tomatoes with, e.g., 200 ppm of lycopene or higher can be developed. Furthermore, genetic engineering techniques make it possible to create tomato varieties having increased lycopene content. As will be apparent to the skilled person, it is particularly convenient to be able to concentrate a high coloring power in small amounts of coloring material, which is achieved by the invention by concentrating the chromoplasts containing a high content of lycopene. Thus, according to one preferred embodiment of the invention, the coloring material of the invention is obtained from a high lycopene-content tomato variety.

The coloring material of the invention can be provided for use in different forms. In one preferred embodiment of the invention, it is provided in dehydrated form. In another preferred embodiment of the invention, it is provided in frozen form, or preserved by other means, e.g., by pasteurization.

The invention is also directed to the use as colorants of a material comprising as the color-imparting agent chromplast particles containing crystalline lycopene, obtained by a process comprising the steps of:
a) selecting and pretreating tomatoes by washing or the like procedure;
b) breaking the tomatoes;
c) removing the seeds and waste materials; and
d) recovering the insoluble material from the tomato serum.

According to a preferred embodiment of the invention, the process further comprises water-washing the insoluble material, to remove water-soluble flavors.

Another preferred embodiment of the invention further comprises size-reducing the insoluble material, to better utilize the staining power of the material through the more uniform dispersion thereof in the final product, thus obtaining a better and more uniformly colored product.

If the resulting material is to be stored for a relatively long period of time, it is desired to process the insoluble material to avoid degradation thereof by microbial spoilage. This can be effected in many ways known in the art, e.g., by aseptic packaging, freezing, canning or dehydrating, alone or with the addition of suitable food preservatives.

The process is schematically shown in Fig. 1, two alternative routes being shown by way of example, such processes being provided for the purpose of illustration only, which example is not to be construed as a limitation of the invention. At the beginning, the tomatoes are washed, broken and screened to remove seeds, skin and other waste materials, leaving a color concentrate and serum containing soluble tomato solids. The serum, which is a by-product in this process, is separated by centrifugation. The remaining color concentrate can be processed according to either of the two schemes shown.

Route 1, provides for size reduction of particles in the color concentrate, e.g., in a colloid mill, and the resulting fine material is sent to a packaging stage, to be discussed below.

Route 2 includes the removal of water-soluble flavor materials. The color concentrate is washed with water, and the resulting wet material is centrifuged, size-reduced, preserved and packed.

Packing involves processing to avoid deterioration and to impart a suitable shelf life to the coloring material. This can be achieved in many ways known in the art, which are therefore not discussed here in detail. For instance, the material can be sterilized, frozen, dried, or can be packed or canned. Suitable food preservatives can also be used.

Also encompassed by the invention is a food product containing a coloring material according to the invention.

A particularly important embodiment of the invention is concerned with the coloring of tomato products. As will be apparent to the skilled person, the color of the tomatoes available to plants which produce, e.g., ketchup or tomato concentrates, varies according to the type of tomato, the time of the year, the degree of ripening, etc. However, it is a requirement of the food industries that the color of the final product be kept constant, so that the same ketchup color is supplied by the same manufacturer. Since it is forbidden to add synthetic coloring materials to such tomato products, and they must contain only materials which originate from tomatoes, standardization of the product color is often impossible, and the color fluctuates over a wide range.

According to an embodiment of the invention this problem is solved by using as the coloring material chromoplast particles containing crystalline lycopene. Thus, the invention is also directed to a method for producing tomato products of satisfactory and uniform color, which process comprises adding to the product obtained from the processing of tomatoes an amount of a coloring material according to the invention, sufficient to obtain the desired color. As will be understood by persons skilled in the art, different shades of red can be obtained in a given product, which can be defined by colorimetric measurements. These colorimetric methods, as well as apparatus for carrying them out, are well known in the art and, therefore, are not discussed herein in detail, for the sake of brevity. However, it is understood that the exact shade of red desired can be determined in each case, and can be obtained by the addition of the coloring materials of the invention.

### Example 1

Tomatoes containing 120 ppm of lycopene were treated by pre-washing, breaking and screening, centrifugal separation and size-reduction, to yield a final color concentrate containing 1000 ppm of lycopene.

200 Ml of tap water were placed in a beaker, and 20 gr of the color concentrate obtained above were added, and the mixture was passed through a colloid mill to produce a stable dispersion similar to tomato juice in color, appearance and consistency. The product had a slight tomato flavor.

The stability of the suspension was similar to that of tomato juice.

### Example 2

Example 1 was repeated, with the exception that the color concentrate was rinsed once with an equal volume of water and centrifuged, before undergoing size reduction. After dispersion in water, a similar stable red liquid was obtained, practically free from tomato flavor.

### Example 3

The coloring material obtained in Example 1 was added, instead of to tap water, to a tomato concentrate, to ketchup and to pizza sauce, the color of which was unsatisfactorily light. In all cases an addition of small amounts (below 10%) of the concentrate coloring material of the invention significantly improved the color of the product and shifted it towards red color.

All the above description has been given for the purpose of illustration.

## Claims

1. Use as a colorant of a material comprising as the color-imparting agent chromoplast particles containing crystalline lycopene.

2. The use according to claim 1 **characterized in that** said material is obtained by a process comprising the steps of:
a) selecting and pretreating tomatoes by washing;
b) breaking the tomatoes;
c) screening out seeds and other waste components from said broken wherein the said chromoplast particles only;
d) separating by centrifugation said broken and screened tomatoes into a serum fraction containing soluble fruit solids and a pulp fraction containing said chromoplast particles;
e) recovering and size-reducing said pulp fraction.

3. The use according to claim 2 in which said recovered pulp fraction containing said chromoplast particles is washed with water to remove water-soluble flavors and separated by centrifugation from the washing water prior to size reducing.

4. The use according to claim 1 of derived from tomatoes.

5. The use according to claim 3 in which the tomato is a high lycopene-content tomato variety.

6. The use according to anyone of preceding claims in which said pulp fraction containing said chromoplast particles is further processed to avoid degradation thereof.

7. The use according to claim 5 in which said further processing comprises either one of aseptic packaging, freezing, canning or dehydrating, alone or with the addition of suitable food preservatives.

8. The use according to claim 7 wherein said material is in dehydrated form.

9. The use according to claim 7 wherein said material is in frozen form.

10. Method for coloring a food or cosmetic product using a colorant of a material comprising as the color-imparting agent chromoplast particles containing crystalline lycopene.

11. The method according to claim 10 **characterized in that** said material is obtained by a process comprising the steps of:
a) selecting and pretreating tomatoes by washing;
b) breaking the tomatoes;
c) screening out seeds and other waste components from said broken tomatoes;
d) separating by centrifugation said broken and screened tomatoes into a serum fraction containing soluble fruit solids and a pulp fraction containing said chromoplast particles;
e) recovering and size-reducing said pulp fraction.

12. The method according to claim 9 wherein said product is a tomato product.

13. The method according to claim 9 wherein said product is a food product.

## Patentansprüche

1. Verwendung eines Materials als Farbstoff, das als das farbgebende Mittel Chromoplastenpartikel umfaßt, die kristallines Lycopin enthalten.

2. Die Verwendung gemäß Anspruch 1, **dadurch gekennzeichnet, daß** das Material durch ein Verfahren erhalten wird, das folgende Schritte umfaßt:
(a) Auswählen und Vorbehandeln von Tomaten, indem sie gewaschen werden;
(b) Zerteilen der Tomaten;
(c) Aussieben von Kernen und anderen Abfallkomponenten aus den zerteilten Tomaten;
(d) Trennen der zerteilten und ausgesiebten Tomaten durch Zentrifugation in eine Serumfraktion, die lösliche Feststoffe der Frucht enthält, und eine Fruchtfleischfraktion, die die Chromoplastenpartikel enthält;
(e) Rückgewinnung und Größenreduktion der Fruchtfleischfraktion.

3. Die Verwendung gemäß Anspruch 2, worin die rückgewonnene Fruchtfleischfraktion, die die Chromoplastenpartikel enthält, mit Wasser gewaschen wird, um wasserlösliche Geschmacksstoffe zu entfernen, und vor der Größenreduktion durch Zentrifugation vom Waschwasser abgetrennt wird.

4. Die Verwendung gemäß Anspruch 1, worin die Chromoplastenpartikel von Tomaten abgeleitet sind.

5. Die Verwendung gemäß Anspruch 3, worin die Tomate eine Tomatenvarietät mit hohem Lycopingehalt ist.

6. Die Verwendung gemäß irgendeinem der vorhergehenden Ansprüche, worin die Fruchtfleischfraktion, die die Chromoplastenpartikel enthält, weiter verarbeitet wird, um deren Abbau zu verhindern.

7. Die Verwendung gemäß Anspruch 5, worin diese Weiterverarbeitung entweder steriles Abpacken, Einfrieren, Eindosen oder Trocknen alleine oder mit dem Zusatz von geeigneten Nahrungskonservierungsstoffen umfaßt.

8. Die Verwendung gemäß Anspruch 7, worin das Material in dehydrierter Form vorliegt.

9. Die Verwendung gemäß Anspruch 7, worin das Material in gefrorener Form vorliegt.

10. Verfahren zum Färben eines Nahrungs- oder kosmetischen Produktes unter Verwendung eines Farbstoffes eines Materials, das als das farbgebende Mittel Chromoplastenpartikel umfaßt, die kristallines Lycopin enthalten.

11. Das Verfahren gemäß Anspruch 10, **dadurch gekennzeichnet, daß** das Material durch ein Verfahren erhalten wird, das folgende Schritte umfaßt:
(a) Auswählen und Vorbehandeln von Tomaten, indem sie gewaschen werden;
(b) Zerteilen der Tomaten;
(c) Aussieben von Kernen und anderen Abfallkomponenten aus den zerteilten Tomaten;
(d) Trennen der zerteilten und ausgesiebten Tomaten durch Zentrifugation in eine Serumfraktion, die lösliche Feststoffe der Frucht enthält, und eine Fruchtfleischfraktion, die die Chromoplastenpartikel enthält;
(e) Rückgewinnung und Größenreduktion der Fruchtfleischfraktion.

12. Das Verfahren gemäß Anspruch 9, worin das Produkt ein Tomatenprodukt ist.

13. Das Verfahren gemäß Anspruch 9, worin das Produkt ein Nahrungsprodukt ist.

## Revendications

1. Utilisation comme colorant d'une substance comprenant, en tant qu'agent conférant la coloration, des particules de chromoplaste contenant du lycopène cristallin.

2. L'utilisation selon la revendication 1 **caractérisée en ce que** ladite substance est obtenue par un procédé comprenant les étapes de :
a) sélection et prétraitement de tomates par lavage ;
b) concassage des tomates ;
c) filtration des graines et autres déchets desdites tomates concassées ;
d) séparation par centrifugation desdites tomates concassées et filtrées en une fraction de jus contenant des solides de fruit soluble et une fraction de pulpe contenant lesdites particules de chromoplaste ;
e) récupération et broyage de ladite fraction de pulpe.

3. L'utilisation selon la revendication 2 dans laquelle ladite fraction de pulpe récupérée contenant lesdites particules de chromoplaste est lavée à l'eau pour éliminer les arômes hydrosolubles et séparée par centrifugation des eaux de lavage avant le broyage.

4. L'utilisation selon la revendication 1, dans laquelle lesdites particules de chromoplaste dérivent des tomates.

5. L'utilisation selon la revendication 3 dans laquelle la tomate est une variété de tomate à haute teneur en lycopène.

6. L'utilisation selon l'une quelconque des revendications précédentes dans laquelle ladite fraction de pulpe contenant lesdites particules de chromoplaste est traitée en outre pour éviter sa dégradation.

7. L'utilisation selon la revendication 5 dans laquelle ledit traitement complémentaire comprend un emballage aseptique, une congélation, une mise en boîte ou une déshydratation, seule ou avec l'addition de conservateurs alimentaires convenables.

8. L'utilisation selon la revendication 7 dans laquelle ladite substance est sous forme déshydratée.

9. L'utilisation selon la revendication 7 dans laquelle ladite substance est sous forme congelée.

10. Procédé de coloration d'un aliment ou d'un produit cosmétique en utilisant un colorant d'une substance comprenant en tant qu'agent conférant la coloration, des particules de chromoplaste contenant des lycopènes cristallins.

11. Procédé selon la revendication 10, **caractérisé en ce que** ladite substance est obtenue par un procédé comprenant les étapes de :
a) sélection et prétraitement de tomates par lavage ;
b) concassage des tomates ;
c) filtration des graines et autres déchets desdites tomates concassées ;
d) séparation par centrifugation desdites tomates concassées et filtrées en une fraction de jus contenant des solides du fruit soluble et une fraction de pulpe contenant lesdites particules de chomoplaste ;
e) récupération et broyage de ladite fraction de pulpe.

12. Procédé selon la revendication 9, dans lequel ledit produit est un produit provenant de la tomate.

13. Procédé selon la revendication 9, dans lequel ledit produit est un produit alimentaire.
